(19) Europäisches Patentamt / European Patent Office / Office européen des brevets

(11) **EP 3 027 496 B1**

(12) **FASCICULE DE BREVET EUROPEEN**

(45) Date de publication et mention de la délivrance du brevet:
**11.05.2022 Bulletin 2022/19**

(21) Numéro de dépôt: **14744118.2**

(22) Date de dépôt: **28.07.2014**

(51) Classification Internationale des Brevets (IPC):
**B62M 6/50** *(2010.01)*

(52) Classification Coopérative des Brevets (CPC):
**B62M 6/50; B60L 3/0061; B60L 15/20;**
**B60L 50/20; B60L 50/66; B62M 6/45;**
B60L 2200/12; B60L 2240/12; B60L 2240/421;
B60L 2240/423; B60L 2240/80; B60L 2260/44;
Y02T 10/64; Y02T 10/70; Y02T 10/72

(86) Numéro de dépôt international:
**PCT/EP2014/066154**

(87) Numéro de publication internationale:
**WO 2015/014782 (05.02.2015 Gazette 2015/05)**

(54) **DISPOSITIF ET PROCÉDÉ DE RÉGULATION DE LA PUISSANCE D'ASSISTANCE D'UN VÉLO À ASSISTANCE ÉLECTRIQUE**

VORRICHTUNG UND VERFAHREN ZUR REGELUNG DER HILFSLEISTUNG EINES FAHRRADS MIT ELEKTRISCHEM HILFSANTRIEB

DEVICE AND METHOD FOR REGULATING THE ASSISTANCE POWER OF AN ELECTRIC POWER-ASSISTED BICYCLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.07.2013 FR 1357590**

(43) Date de publication de la demande:
**08.06.2016 Bulletin 2016/23**

(73) Titulaire: **Compagnie Générale des Etablissements Michelin**
**63000 Clermont-Ferrand (FR)**

(72) Inventeur: **MODOLO, Ivan**
**F-63040 Clermont-Ferrand Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 1 967 446        CN-U- 202 783 657**
**GB-A- 2 056 684         JP-A- 2000 272 575**
**JP-A- 2002 145 168      JP-A- 2011 178 341**
**KR-A- 20120 051 177     US-A- 3 898 563**
**US-A1- 2003 047 369**

**Description**

DOMAINE DE L'INVENTION

La présente invention concerne les dispositifs d'assistance électrique pour vélo et les vélos équipés de tels dispositifs. Par la suite, on désignera abusivement de tels vélos sous le terme de « vélo électrique ».

Dans ce domaine, on connaît un certain nombre de dispositifs disponibles sur le marché. Certains dispositifs d'assistance utilisent une machine électrique placée dans le moyeu de l'une des roues du vélo. Cette machine électrique entraine la roue directement ou par l'intermédiaire d'un système de réduction.

D'autres dispositifs utilisent un groupe motoréducteur entrainant le pédalier du vélo et donc utilisant la transmission existante du vélo. Par ailleurs, la demande FR 12/61631, déposée au nom de la Demanderesse, décrit un dispositif comprenant une machine électrique comprenant un rotor entrainant un pignon moteur. Le pignon moteur entraîne une roue du vélo par un système d'engrenage de la denture du pignon sur une denture solidaire du bandage du pneumatique équipant la roue.

Quel que soit le dispositif de motorisation choisi, celui-ci doit s'accompagner d'un système de pilotage du moteur pour réguler la puissance d'assistance fournie au cycliste.

La législation française prévoit plusieurs conditions pour qu'un vélo à assistance électrique soit classé dans la catégorie « cycle » et non « cyclomoteur », certaines de ces conditions ayant un impact direct sur le pilotage du moteur :

- Le moteur doit s'arrêter dès que le cycliste arrête de pédaler,
- Le moteur doit s'arrêter lorsque la vitesse atteint 25 km/h,
- Le moteur doit avoir une puissance nominale maximale de 250 watts, et
- Le vélo ne doit pas être muni de poignée d'accélération, d'interrupteur, de bouton ou tout autre dispositif permettant au vélo d'avancer seul, à l'exception d'un bouton ON/OFF.

On connaît un certain nombre de dispositifs de pilotage répondant à ces conditions réglementaires, notamment des dispositifs comprenant un capteur de pédalage installé sur le pédalier, et un capteur pour évaluer le couple exercé sur le pédalier à un instant donné. KR 2012 0051177 A décrit un dispositif de régulation de la puissance d'assistance d'un vélo selon le préambule de la revendication 1 et un procédé de régulation selon le préambule de la revendication 7.

Dans ces dispositifs, la puissance d'assistance au cycliste est déterminée en appliquant au moteur électrique un ratio du couple mesuré, ou de la puissance dérivée, ce ratio étant par exemple calculé en fonction d'un mode d'assistance choisi par le cycliste.

L'inconvénient de ces dispositifs réside dans l'installation du capteur de couple, qui nécessite une modification du vélo pour l'intégration dans le pédalier.

La présente invention vise donc à fournir un procédé et un dispositif de régulation de la puissance d'assistance pour vélo électrique permettant de remédier aux inconvénients précités tout en respectant les conditions réglementaires.

BREVE DESCRIPTION DE L'INVENTION

Ainsi, la présente invention concerne un dispositif de régulation de la puissance d'assistance d'un vélo muni d'une machine électrique d'assistance, le dispositif comprenant

- Des moyens pour détecter le sens de rotation du pédalier du vélo,
- Des moyens pour mesurer la vitesse d'une roue du vélo,
- Des moyens pour calculer, à partir de l'information de vitesse, une puissance totale du véhicule, et l'invention définit également que la puissance totale du véhicule est calculée avec des équations de la cinématique telles que définies dans la revendication 1.
- Des moyens pour déterminer, à partir de la puissance totale calculée, du sens de rotation du pédalier et d'un facteur d'assistance choisi par le cycliste, une consigne en puissance du moteur électrique.

Dans une réalisation particulière, le dispositif comprend en outre des moyens pour déterminer la pente de la route sur laquelle évolue le vélo, cette pente étant utilisée pour le calcul de la puissance du véhicule.

Dans une réalisation particulière, les moyens pour déterminer la pente comprennent une plateforme inertielle comprenant un accéléromètre et un gyroscope.

Dans la présente invention, le dispositif comprend en outre un variateur de vitesse ou un variateur de couple permettant de commander le moteur électrique en fonction de la consigne en puissance déterminée.

Dans une réalisation particulière, les moyens pour détecter le sens de rotation du pédalier du vélo comprennent deux capteurs magnétiques, par exemple des capteurs à effet Hall ou des interrupteurs magnétiques, chacun des capteurs collaborant avec au moins un aimant installé sur le plateau du pédalier.

Dans une réalisation particulière, les moyens pour mesurer la vitesse d'une roue du vélo comprennent un capteur magnétique, par exemple un interrupteur magnétique, collaborant avec au moins un aimant installé sur la roue, par exemple sur la jante, sur un rayon ou même sur le pneumatique. De manière préférentielle, le capteur magnétique collabore avec plusieurs aimants. En effet, plus le nombre d'aimants augmente, plus il est rapide de calculer la vitesse et l'accélération de la roue.

Dans une réalisation particulière, le dispositif comprend un moyen de choix, par le cycliste, d'un mode d'assistance, et un moyen de transmission de ce choix aux moyens de calcul, sous forme d'un facteur d'assistance.

Par ailleurs, l'invention concerne également un procédé de régulation de la puissance d'assistance d'un vélo muni d'une machine électrique d'assistance, le procédé comprenant les étapes suivantes :

- on détermine un sens de rotation du pédalier et une vitesse de roue,
- en fonction de ces données, et d'un ensemble de paramètres prédéterminées, on calcule une puissance totale du vélo, et l'invention définit également que la puissance totale du véhicule est calculée avec des équations de la cinématique telles que définies dans la revendication 1.
- en fonction de la puissance totale du vélo et d'un facteur d'assistance prédéterminé, on calcule une consigne de puissance de la machine électrique d'assistance.

Dans un mode de réalisation, le procédé comprend en outre l'étape de déterminer un angle du véhicule, représentant la pente du sol sur lequel il évolue.

## BREVE DESCRIPTION DES FIGURES

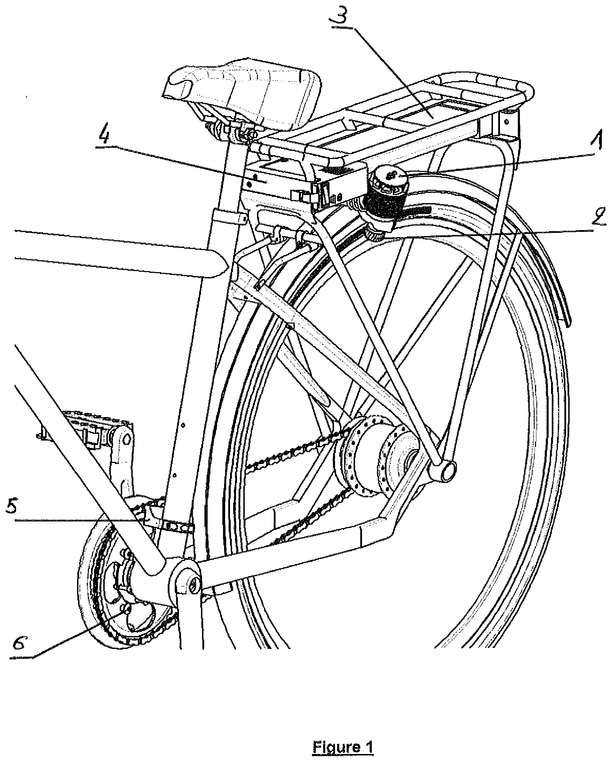

D'autres objectifs et avantages de l'invention apparaîtront clairement dans la description qui va suivre d'un mode de réalisation préféré mais non limitatif, illustré par la figure 1 qui représente une vue partielle d'un vélo à assistance électrique, muni d'un dispositif selon l'invention.

## DESCRIPTION DU MEILLEUR MODE DE REALISATION DE L'INVENTION

Un dispositif d'assistance électrique pour vélo comprend généralement une machine électrique 1, des moyens 2 d'entraînement du vélo par la machine électrique, une source d'énergie 3 pour alimenter la machine électrique, et des moyens de contrôle 4 de la machine électrique. Différentes configurations sont disponibles, ainsi que précédemment décrit, pour l'ensemble de ces éléments. Dans cet exemple, la source d'énergie 3 prend la forme d'une batterie plate installée sous le porte-bagage du vélo.

La présente invention, portant sur un dispositif de régulation de la puissance d'assistance, vient avantageusement s'inscrire dans les moyens de contrôle de la machine électrique. Nous allons décrire ci-après, à titre non limitatif, un mode de réalisation particulier de cette invention.

Le dispositif de régulation de la puissance d'assistance comprend préférentiellement un ensemble de capteurs : deux capteurs installés sur le pédalier, pour déterminer la mise en rotation du pédalier, et le sens de rotation ; un capteur de vitesse installé sur la roue, pour déterminer la puissance de la roue. Il comprend également une plateforme inertielle, dont l'utilisation sera ultérieurement décrite, et une unité centrale électronique pour la mise en oeuvre de l'ensemble des calculs et algorithmes décrits dans la présente demande. La plateforme inertielle et l'unité centrale électronique sont installées, dans l'exemple montré sur la figure 1, dans le boîtier 4. Ils peuvent être placés en différentes positions sur le cadre du vélo, et sont rendues solidaires de ce cadre.

Les capteurs utilisés sont, par exemple, des capteurs à effet Hall. On peut également utiliser des capteurs de technologie dite « reed », également appelés interrupteurs magnétiques. Pour faciliter la lecture, ces capteurs seront dénommés « capteurs reed » dans la suite de la description. Un tel capteur est constitué d'un contact magnétique 5 solidaire de l'élément de base du capteur destiné à collaborer avec un aimant 6. Lorsque le contact magnétique et l'aimant sont à proximité l'un de l'autre, ils ferment l'interrupteur, ce qui revient à établir un courant, qui permet donc de détecter la position de l'aimant à cet instant précis. Dans le cas d'un capteur à effet Hall, ces capteurs étant alimentés, ils fournissent directement une information numérique sous forme d'un « 0 » ou d'un « 1 », correspondant à l'absence ou à la présence d'un champ magnétique, créé par l'aimant, à proximité du contact magnétique. Le capteur magnétique est relié à l'unité centrale 4 pour transmettre l'information issue de la détection.

Dans le cas présent, il est utile de disposer, pour la détection du pédalage, de deux capteurs de ce type. En effet, un capteur unique permettrait, certes, de déterminer que le pédalier est en mouvement, mais il ne permettrait pas de détecter le sens de rotation. Or, un dispositif selon l'invention ne doit préférentiellement pas apporter d'assistance lorsque le cycliste pédale en marche arrière.

Par ailleurs, de manière préférentielle toujours, six aimants sont répartis équitablement sur le pourtour du plateau du pédalier. Ceci permet de garantir un temps de détection assez court, puisque cela évite de devoir attendre un tour de pédalier complet avant de détecter un démarrage du pédalage.

Le capteur de vitesse de la roue, non représenté ici, fonctionne sur le même principe, avec de manière préférentielle trois aimants répartis équitablement sur le pourtour de la jante de la roue sur laquelle le système de détection est installé. Ainsi, on mesure le temps entre le passage du contact devant un premier aimant et devant l'aimant suivant sur la jante de la roue. La distance séparant ces deux aimants étant une information connue, il est alors possible de déterminer la vitesse de la roue.

Par ailleurs, dans ce mode de réalisation particulier, le dispositif de régulation comporte une plateforme inertielle, également appelée centrale à inertie, à six degrés de liberté. Cette plateforme est équipée d'un accéléromètre, utilisant trois degrés de liberté, et d'un gyroscope, utilisant les trois autres. Une telle plateforme inertielle permet de déterminer la pente de la route sur laquelle roule le vélo, sous forme d'un angle a. La pente de la route peut être assimilée à l'angle de tangage du vélo. La plateforme inertielle pourrait également fournir avantageusement l'angle de roulis du vélo, qui permet de représenter l'angle avec lequel le cycliste se penche. Toutefois, une telle information n'est pas utilisée dans le présent mode de réalisation.

La plateforme inertielle permet également de déterminer une accélération du véhicule. Il est à noter que cette information est redondante, puisque l'accélération est déterminable, dans ce mode de réalisation, en dérivant l'information de vitesse donnée par le capteur reed précédemment décrit.

Dans la pratique, le fonctionnement de la plateforme inertielle s'écarte des équations idéales à cause des erreurs qui affectent les mesures des rotations et des accélérations (biais, bruits, facteurs d'échelle, non-linéarités, ...) et qui engendrent des dérives au cours du temps des estimations des assiettes, de la vitesse et de la position.

Pour limiter ces dérives des intégrations dans le traitement des informations d'accélération et d'inertie, on envisage de mettre en oeuvre des algorithmes d'hybridation avec d'autres capteurs que les capteurs de la plateforme inertielle.

A cet effet, on peut envisager, dans une première configuration préférentielle, d'utiliser un filtre de Kalman étendu, qui permet d'estimer le biais de la plateforme inertielle à partir de l'information de vitesse issue du capteur reed. Un tel filtre de Kalman est bien connu de l'homme du métier en traitement du signal, et ne sera donc pas ici décrit en détail.

Dans une autre configuration préférentielle, la pente de la route est, quant à elle, extraite des informations d'accélération et d'inertie fournies par la centrale à inertie, en utilisant une matrice de direction du cosinus (DCM).

Cette deuxième configuration préférentielle est moins complexe et moins gourmande en ressource de calculs que le filtre de Kalman. Toutefois, on a constaté que cette méthode, si elle fournit des résultats fiables dans le calcul de la pente à vitesse constante, induit des erreurs en présence de fortes accélérations ou décélérations. Pour remédier à cela, dans un exemple de réalisation, on réinjecte les informations de vitesse et d'accélération calculées à l'aide du capteur reed aux équations DCM.

Une fois que l'ensemble des informations de pédalage, de vitesse, d'accélération et de pente ont été mesurées et/ou calculées, il est alors possible de déterminer la puissance totale du véhicule. Pour cela, on utilise des équations de la cinématique d'un corps en mouvement accéléré, également appelées équations MRUA, pour mouvement rectiligne uniformément accéléré.

Ainsi, la puissance totale du véhicule est calculée sous la forme

$$P_{totale\,(t)} = P_{aérodynamique\,(t)} + P_{résistive\,(t)} + P_{accélération\,(t)}$$

avec

$$P_{aérodynamique\,(t)} = \frac{1}{2} * \rho * S * C_x * V_{(t)}^3$$

$$P_{résistive(t)} = \{M * [\sin(\alpha) + C_{RR} * \cos(\alpha)] * g + F_{int}\} * V(t)$$

$$P_{accélération\,(t)} = \frac{1}{2} * M * a(t) * \big(V(t) + V(t-1)\big) \approx M * a(t) * V(t)$$

$C_{RR}$ est le coefficient de roulement de sol sur lequel roule le vélo. Il est par exemple égal à 0,0046 sur du goudron. Dans une réalisation avantageuse, ce coefficient de roulement est adapté en fonction du mode d'assistance choisi par le cycliste, par exemple un choix entre « route » et « VTT ».

S est la surface frontale estimée de l'ensemble « vélo + cycliste ». Elle est par exemple fixée à 0.5 m².

$C_x$ est le coefficient de pénétration dans l'air, par exemple fixé à 1.2 pour le calcul. $F_{int}$ est la force interne, représentative des frottements des roulements du vélo, qui peut être négligé dans le cas présent.

Concernant la masse M, dans un mode de réalisation particulier, elle est estimée à 15 kg pour le vélo et 70 kg pour le cycliste, ce qui donne une masse totale dans 85 kg. On pourrait toutefois envisager de permettre au cycliste d'entrer lui-même sa masse pour affiner les calculs, g et ρ sont des données connues : g est la constante de gravité terrestre, et vaut 9.81 m/s². ρ est la densité de l'air au niveau de la mer, et vaut 1.225 kg / m³.

Les autres éléments utiles pour le calcul de la puissance totale sont les variables déterminées par les différents moyens précédemment décrits, à savoir la vitesse du véhicule $V(t) = \frac{\Delta x}{\Delta t}$, l'accélération du véhicule $a(t) = \frac{\Delta V}{\Delta t}$, et l'angle d'inclinaison du véhicule, représentant la pente de la route, a.

Une fois cette puissance totale calculée, l'unité centrale détermine alors la consigne en puissance du moteur électrique d'assistance de la façon suivante :

$$P_{consigne\_moteur(t)} = \frac{P_{totale(t)}}{1 + \frac{1}{A}}$$

A est une valeur numérique positive représentant le facteur d'assistance. Ce facteur dépend du mode d'assistance choisi par le cycliste. Des exemples de mode d'assistance sont par exemple « sportif », « calme », « route », « VTT », etc.

Le choix du mode d'assistance peut être effectué par différents moyens, par exemple par un potentiomètre. On pourrait envisager tout autre moyen de sélection du mode d'assistance, par exemple par le biais d'une interface sous la forme d'un écran tactile, ou bien encore par le biais d'un appareil de télécommunications qui serait en liaison sans fil avec le dispositif de régulation.

Par ailleurs, dans un mode de réalisation particulier, la redondance de la mesure d'accélération du véhicule, déjà évoquée, peut être utilisée pour calibrer les offset du positionnement de la plateforme inertielle, en prenant l'accélération par la mesure effectuée sur la roue, comme référence. Cette calibration doit être effectuée à vitesse basse et constante.

Ainsi, on constate que la présente invention permet de proposer un dispositif de régulation de la puissance d'assistance qui respecte les exigences réglementaires, en s'affranchissant de la connaissance de la valeur du couple exercé. Le dispositif ici décrit présente l'avantage de ne pas être trop invasif sur le vélo. Il est donc possible d'adapter ce dispositif de manière amovible sur tout type de vélo, sans nécessiter aucune modification structurelle.

**Revendications**

1. Dispositif de régulation de la puissance d'assistance d'un vélo muni d'une machine électrique d'assistance, le dispositif comprenant

   • Des moyens pour détecter le sens de rotation du pédalier du vélo,
   • Des moyens pour mesurer la vitesse d'une roue du vélo,
   • Des moyens pour calculer, à partir de l'information de vitesse une puissance totale du véhicule et **caractérisé en ce que** la puissance totale du véhicule est calculée sous la forme

$$P_{totale\ (t)} = P_{aérodynamique\ (t)} + P_{résistive\ (t)} + P_{accélération\ (t)}$$

   *avec*

$$P_{aérodynamique\ (t)} = \frac{1}{2} * \rho * S * C_x * V_{(t)}^3$$

$$P_{résistive(t)} = \{M * [\sin(\alpha) + C_{RR} * \cos(\alpha)] * g + F_{int}\} * V(t)$$

$$P_{accélération\ (t)} = \frac{1}{2} * M * a(t) * \left(V(t) + V(t-1)\right) \approx M * a(t) * V(t)$$

où $C_{RR}$ est le coefficient de roulement de sol sur lequel roule le vélo, S est la surface frontale estimée de l'ensemble vélo et cycliste, $C_x$ est le coefficient de pénétration dans l'air, $F_{int}$ est la force interne, M est la masse totale de l'ensemble vélo et cycliste, g est la constante de gravité terrestre, ρ est la densité de l'air au niveau de la mer, a représente la pente de la route, *V(t)* est la vitesse du véhicule, *a(t)* est l'accélération du véhicule, et **en ce que** le dispositif comprend également:

• Des moyens pour déterminer, à partir de la puissance totale calculée, du sens de rotation du pédalier et d'un facteur d'assistance choisi par le cycliste, une consigne en puissance du moteur électrique, et
• Un variateur de vitesse ou un variateur de couple permettant de commander le moteur électrique en fonction de la consigne en puissance déterminée.

2. Dispositif selon la revendication 1, comprenant en outre des moyens pour déterminer la pente de la route sur laquelle évolue le vélo, cette pente étant utilisée pour le calcul de la puissance du véhicule.

3. Dispositif selon les revendications 1 et 2, dans lequel les moyens pour déterminer la pente comprennent une plateforme inertielle comprenant un accéléromètre et un gyroscope.

4. Dispositif selon l'une des revendications précédentes, dans lequel les moyens pour détecter le sens de rotation du pédalier du vélo comprennent deux capteurs magnétiques, chacun collaborant avec au moins un aimant installé sur le plateau du pédalier.

5. Dispositif selon l'une des revendications précédentes, dans lequel les moyens pour mesurer la vitesse d'une roue du vélo comprennent un capteur magnétique, collaborant avec au moins un aimant installé sur la roue.

6. Dispositif selon l'une des revendications précédentes, comprenant un moyen de choix, par le cycliste, d'un mode d'assistance, et un moyen de transmission de ce choix aux moyens de calcul, sous forme d'un facteur d'assistance.

7. Procédé de régulation de la puissance d'assistance d'un vélo muni d'une machine électrique d'assistance, le procédé comprenant les étapes suivantes :

- on détermine un sens de rotation du pédalier et une vitesse de roue,
- en fonction de ces données, et d'un ensemble de paramètres prédéterminées, on calcule une puissance totale du vélo, et **caractérisé en ce que** la puissance totale du véhicule est calculée sous la forme

$$P_{totale\ (t)} = P_{aérodynamique\ (t)} + P_{résistive\ (t)} + P_{accélération\ (t)}$$

*avec*

$$P_{aérodynamique\ (t)} = \frac{1}{2} * \rho * S * C_x * V_{(t)}^3$$

$$P_{résistive(t)} = \{M * [\sin(\alpha) + C_{RR} * \cos(\alpha)] * g + F_{int}\} * V(t)$$

$$P_{accélération\ (t)} = \frac{1}{2} * M * a(t) * \left(V(t) + V(t-1)\right) \approx M * a(t) * V(t)$$

où $C_{RR}$ est le coefficient de roulement de sol sur lequel roule le vélo, S est la surface frontale estimée de l'ensemble vélo et cycliste, $C_x$ est le coefficient de pénétration dans l'air, $F_{int}$ est la force interne, M est la masse totale de l'ensemble vélo et cycliste, g est la constante de gravité terrestre, ρ est la densité de l'air au niveau de la mer, a représente la pente de la route, *V(t)* est la vitesse du véhicule, *a(t)* est l'accélération du véhicule,
- en fonction de la puissance totale du vélo et d'un facteur d'assistance prédéterminé, on calcule une consigne de puissance de la machine électrique d'assistance

- on commande le moteur électrique en fonction de la consigne en puissance déterminée à l'aide d'un variateur de vitesse ou d'un variateur de couple.

**8.** Procédé de régulation selon la revendication 7, comprenant en outre l'étape de déterminer un angle du véhicule, représentant la pente du sol sur lequel il évolue.

**Patentansprüche**

**1.** Vorrichtung zur Regelung der Hilfsleistung eines mit einem elektrischen Hilfsantrieb versehenen Fahrrads, wobei die Vorrichtung umfasst

• Einrichtungen zum Bestimmen der Drehrichtung des Tretlagers des Fahrrads,
• Einrichtungen zum Messen der Geschwindigkeit eines Rads des Fahrrads,
• Einrichtungen zum Berechnen, anhand der Geschwindigkeitsinformation, einer Gesamtleistung des Fahrzeugs,
und **dadurch gekennzeichnet ist, dass** die Gesamtleistung des Fahrzeugs berechnet wird in der Form

$$P_{gesamt(t)} = P_{Aerodynamik(t)} + P_{Widerstand(t)} \quad P_{Beschleunigung(t)}$$

*mit*

$$P_{Aerodynamik(t)} = \frac{1}{2} * \rho * S * C_x * V_{(t)}^3$$

$$P_{Widerstand(t)} = \{M * [sin(\alpha) + C_{RR} * cos(\alpha)] * g + F_{int}\} * V(t)$$

$$P_{Beschleunigung(t)} = \frac{1}{2} * M * a(t) * (V(t) + V(t-1)) \approx M * a(t) * V(t)$$

wobei $C_{RR}$ der Rollbeiwert des Bodens ist, auf dem das Fahrrad rollt, S die geschätzte Stirnfläche der Einheit aus Fahrrad und Fahrradfahrer ist, $C_x$ der Luftwiderstandsbeiwert ist, $F_{int}$ die interne Kraft ist, M die Gesamtmasse der Einheit aus Fahrrad und Fahrradfahrer ist, g die Gravitationskonstante ist, $\rho$ die Dichte der Luft auf Meereshöhe ist, $\alpha$ für die Neigung der Straße steht, V(t) die Geschwindigkeit des Fahrzeugs ist, *a*(t) die Beschleunigung des Fahrzeugs ist, und dadurch, dass die Vorrichtung ferner umfasst:
• Einrichtungen zum Bestimmen, anhand der berechneten Gesamtleistung, der Drehrichtung des Tretlagers und eines vom Fahrradfahrer gewählten Hilfsfaktors, eines Leistungssollwerts des Elektromotors und
• einen Geschwindigkeitsregler oder Drehmomentregler, der es ermöglicht, den Elektromotor in Abhängigkeit von dem bestimmten Leistungssollwert zu steuern.

**2.** Vorrichtung nach Anspruch 1, umfassend ferner Einrichtungen zum Bestimmen der Neigung der Straße, auf der sich das Fahrrad fortbewegt, wobei diese Neigung zur Berechnung der Leistung des Fahrzeugs verwendet wird.

**3.** Vorrichtung nach den Ansprüchen 1 und 2, bei der die Einrichtungen zum Bestimmen der Neigung eine inertiale Plattform umfassen, die einen Beschleunigungsmesser und ein Gyroskop umfasst.

**4.** Vorrichtung nach einem der vorhergehenden Ansprüche, bei der die Einrichtungen zum Detektieren der Drehrichtung des Tretlagers des Fahrzeugs zwei magnetische Sensoren umfassen, von denen jeder mit mindestens einem Magneten zusammenwirkt, der am Kettenblatt des Tretlagers angebracht ist.

**5.** Vorrichtung nach einem der vorhergehenden Ansprüche, bei der die Einrichtungen zum Messen der Geschwindigkeit eines Rads des Fahrrads einen magnetischen Sensor umfassen, der mit mindestens einem am Rad angebrachten Magneten zusammenwirkt.

6. Vorrichtung nach einem der vorhergehenden Anspruche, umfassend eine Einrichtung zum Wählen, durch den Fahrradfahrer, eines Hilfsmodus und eine Einrichtung zum Übertragen dieser Wahl an die Berechnungseinrichtungen in Form eines Hilfsfaktors.

7. Verfahren zur Regelung der Hilfsleistung eines mit einem elektrischen Hilfsantrieb versehenen Fahrrads, wobei das Verfahren die folgenden Schritte umfasst:

- Bestimmen einer Drehrichtung des Tretlagers und einer Radgeschwindigkeit,
- Berechnen, in Abhängigkeit von diesen Daten und von einer Menge vorbestimmter Parameter, einer Gesamtleistung des Fahrrads,
und **dadurch gekennzeichnet ist, dass** die Gesamtleistung des Fahrzeugs berechnet wird in der Form

$$P_{gesamt(t)} = P_{Aerodynamik(t)} + P_{Widerstand(t)} \quad P_{Beschleunigung(t)}$$

mit

$$P_{Aerodynamik(t)} = \frac{1}{2} * \rho * S * C_x * V_{(t)}^3$$

$$P_{Widerstand(t)} = \{M * [sin(\alpha) + C_{RR} * cos(\alpha)] * g + F_{int}\} * V(t)$$

$$P_{Beschleunigung(t)} = \frac{1}{2} * M * a(t) * (V(t) + V(t-1)) \approx M * a(t) * V(t)$$

wobei $C_{RR}$ der Rollbeiwert des Bodens ist, auf dem das Fahrrad rollt, S die geschätzte Stirnfläche der Einheit aus Fahrrad und Fahrradfahrer ist, $C_x$ der Luftwiderstandsbeiwert ist, $F_{int}$ die interne Kraft ist, M die Gesamtmasse der Einheit aus Fahrrad und Fahrradfahrer ist, g die Gravitationskonstante ist, $\rho$ die Dichte der Luft auf Meereshöhe ist, $\alpha$ für die Neigung der Straße steht, V(t) die Geschwindigkeit des Fahrzeugs ist, $a$(t) die Beschleunigung des Fahrzeugs ist,
- Berechnen, in Abhängigkeit von der Gesamtleistung des Fahrrads und eines vorbestimmten Hilfsfaktors, eines Leistungssollwerts des elektrischen Hilfsantriebs
- Steuern des Elektromotors in Abhängigkeit von dem bestimmten Leistungssollwert mithilfe eines Geschwindigkeitsreglers oder eines Drehmomentreglers.

8. Regelungsverfahren nach Anspruch 7, umfassend ferner den Schritt des Bestimmens eines Winkels des Fahrzeugs, der für die Neigung des Bodens steht, auf dem es sich fortbewegt.

**Claims**

1. Device for regulating the assistance power of a bicycle fitted with an electrical power assistance machine, the device comprising

• means for detecting the sense of rotation of the pedals of the bicycle,
• means for measuring the speed of a wheel of the bicycle,
• means for calculating a total power of the vehicle from the speed information, and **characterised in that** the total power of the vehicle is calculated in the form

$$P_{total(t)} = P_{aerodynamic(t)} + P_{resistive(t)} + P_{acceleration(t)}$$

with

$$P_{aerodynamic\ (t)} = \frac{1}{2} * \rho * S * C_x * V_{(t)}^3$$

$$P_{resistive\ (t)} = \{M * [\sin(\alpha) + C_{RR} * \cos(\alpha)] * g + F_{int}\} * V(t)$$

$$P_{acceleration\ (t)} = \frac{1}{2} * M * a(t) * \left(V(t) + V(t-1)\right) \approx M * a(t) * V(t)$$

where

$C_{RR}$ is the rolling friction coefficient of the surface on which the bicycle is running, S is the estimated front surface area of the bicycle and cyclist combination, $C_x$ is the penetration coefficient in air, $F_{int}$ is the internal force, M is the total mass of the bicycle and cyclist combination, g is the acceleration due to gravity, $\rho$ is the density of air at sea level, $\alpha$ is the gradient of the road, *V(t) is* the speed of the vehicle, a(t) is the acceleration of the vehicle, and that the device comprises also:

• means for determining a power setpoint of the electric motor from the calculated total power, the sense of rotation of the pedals and a power assistance factor selected by the cyclist and
• a speed variator or a torque variator making it possible to control the electric motor as a function of the power setpoint which has been determined.

2. Device according to Claim 1, furthermore comprising means for determining the gradient of the road on which the bicycle is travelling, this gradient being used for the calculation of the power of the vehicle.

3. Device according to Claims 1 and 2, wherein the means for determining the gradient comprise an inertial platform comprising an accelerometer and a gyroscope.

4. Device according to one of the preceding claims, wherein the means for detecting the sense of rotation of the pedals of the bicycle comprise two magnetic sensors, each interacting with at least one magnet fitted to the chains et of the pedals.

5. Device according to one of the preceding claims, wherein the means for measuring the speed of a wheel of the bicycle comprise a magnetic sensor interacting with at least one magnet fitted to the wheel.

6. Device according to one of the preceding claims, comprising a means for selection of a power assistance mode by the cyclist, and a means for transmitting this selection to the calculation means in the form of a power assistance factor.

7. Method for regulating the assistance power of a bicycle fitted with an electrical power assistance machine, the method comprising the following steps:

- the sense of rotation of the pedals and a wheel speed are determined,
- a total power of the bicycle is calculated as a function of these data and a set of predetermined parameters and **characterised in that** the total power of the vehicle is calculated in the form

$$P_{total\ (t)} = P_{aerodynamic\ (t)} + P_{resistive\ (t)} + P_{acceleration\ (t)}$$

with

$$P_{aerodynamic\ (t)} = \frac{1}{2} * \rho * S * C_x * V_{(t)}^3$$

$$P_{resistive\ (t)} = \{M * [\sin(\alpha) + C_{RR} * \cos(\alpha)] * g + F_{int}\} * V(t)$$

$$P_{acceleration\ (t)} = \frac{1}{2} * M * a(t) * \big(V(t) + V(t-1)\big) \approx M * a(t) * V(t)$$

where

$C_{RR}$ is the rolling friction coefficient of the surface on which the bicycle is running, S is the estimated front surface area of the bicycle and cyclist combination, $C_x$ is the penetration coefficient in air, $F_{int}$ is the internal force, M is the total mass of the bicycle and cyclist combination, g is the acceleration due to gravity, $\rho$ is the density of air at sea level, $\alpha$ is the gradient of the road, *V(t)* is the speed of the vehicle, a(*t*) is the acceleration of the vehicle,
- a power setpoint of the electrical power assistance machine is calculated as a function of the total power of the bicycle and of a predetermined power assistance factor,
- the electric motor is controlled as a function of the power setpoint which has been determined using a speed variator or a torque variator.

8. Regulation method according to Claim 7, furthermore comprising the step of determining an angle of the vehicle, representing the gradient of the ground on which it is travelling.

**Figure 1**

## RÉFÉRENCES CITÉES DANS LA DESCRIPTION

**Documents brevets cités dans la description**

- FR 1261631
- KR 20120051177 A